# EUROPÄISCHE PATENTSCHRIFT

(11) **EP 0 569 919 B1**
(45) Veröffentlichungstag und Bekanntmachung des Hinweises auf die Patenterteilung: **12.03.1997**
(21) Anmeldenummer: 93107593.1
(22) Anmeldetag: 10.05.1993
(51) Int. Cl.: C05F 17/02

(54) **Umsetzmaschine zur Aufbereitung von in offenen oder geschlossenen Mietenbehältern lagernden Stoffmengen**
Machine for treating heaps of material by shifting and overturning, in closed or opened containers
Machine pour le traitement par retournement et déplacement des matériaux stockés en tas dans des conteneurs ouverts ou fermés

(30) Priorität: 09.05.1992 DE 4215268
(43) Veröffentlichungstag der Anmeldung: 18.11.1993
(73) Patentinhaber: Grabbe, Klaus, Dr., D-38116 Braunschweig (DE)
(72) Erfinder: Grabbe, Klaus Prof. Dr., D - 3300 Braunschweig (DE); Kordts, Hugo A. Ing. grad., D - 4401 Saerbeck (DE); Schaar, Lothar, Dipl. Ing., D - 3061 Heuerssen (DE)
(74) Vertreter: von Samson-Himmelstjerna, Friedrich R., Dipl.-Phys.

(56) Entgegenhaltungen:
- WO-A-91/01955
- DE-A- 3 803 371
- FR-A- 2 356 613

## Beschreibung

Die Erfindung bezieht sich auf eine Umsetzmaschine, die selbsttätig in offenen oder geschlossenen Mietenbehältern vorwärts oder rückwärts fährt und hierbei die in einer Miete lagernden Stoffgemenge zum Zwecke der Aktivierung und Optimierung des mikrobiellen und/oder chemischen Stoffumsatzes in der Miete mechanisch und/oder chemisch aufbereitet.

### Zugrundeliegender Stand der Technik

Für die Bearbeitung fester Stoffgemenge sind bereits maschinelle Vorrichtungen unterschiedlichster Ausführung bekannt. Die bekannten Vorrichtungen dienen zum Lockern, Zerkleinern, Homogenisieren und/oder Transportieren fester Stoffgemenge. Dabei ist ihre Konstruktion jeweils auf das zu bearbeitende Material so zugeschnitten, daß ihre Funktion, insbesondere die Funktion der Werkzeuge, nicht auf andere Gemengesysteme ohne weiteres übertragbar ist.

Zwischen der Beschaffenheit organischer Reststoffgemenge, zum Beispiel Stallmist, und der Zusammensetzung überwiegend anorganischer Materialien, zum Beispiel Böden oder Formsande, bestehen Unterschiede der Textur und der Dichte, die eine sorgfältige Adaption der Umsetzmaschine, insbesondere deren Werkzeuge an das umzusetzende Material erforderlich machen. Betrachtet man die Vielfalt der Gemengearten im Bereich der Abfallbewirtschaftung, ist diese Aufgabe nur ungenügend gelöst. Eine suboptimale Aufbereitung der Gemenge zu sehr unterschiedlichen Produkten, zum Beispiel Kompostierung biogener Reststoffe, Sanierung schadstoffbelasteter Böden, ist zeitraubend und verschwendet Energie.

Die DE 38 03 371 A1 - **RUDNICK** - beschreibt zum Beispiel eine Umsetzmaschine für Tafelmieten, also sogenannte freie Mieten oder Halden. Diese Umsetzmaschine wird als Schaufelradbagger an einer Kranbrücke zwischen zwei Kranbahnen bewegt. Dabei bestehen die Schaufeln teilweise aus einzelnen Greifzähnen, die mit Reißzähnen kämmen. Die rechen- oder gabelförmigen Schaufeln können mit ihren Greifzähnen axial ausgerichtet an einer oder beiden Seiten einer umlaufenden Scheibe als Schaufelträger angeordnet sein. Oberhalb der Tafelmiete ist eine das rotierende Element, also die umlaufende Scheibe, teilweise überdeckende Haube vorgesehen.

Die DE 36 12 551 Al - **HOFMANN** - beschreibt einen Bagger zum Abtragen von Schüttguthalden, insbesondere im Braunkohletagebau. Eine umlaufende Walze ist derart mit Werkzeugen bestückt, daß auch ein Reversierbetrieb möglich ist. Die umlaufende Walze läuft gegen eine Böschung an, lockert dabei das Schüttgut und transportiert es nach hinten.

Das DE 87 04 843.4 U - **VOGEL** - beschreibt eine Umsetzmaschine zum Umsetzen von Müll auf einem überdachten Kompostierfeld. Dabei fördern umlaufende Grab- und Förderräder das Feststoffgemenge auf ein Förderband, welches den Weitertransport übernimmt. Die Umsetzmaschine weist eine auf Schienen verfahrbare Brücke und eine auf der Brücke verfahrbare Laufkatze auf. Sowohl die Grab- und Förderräder als auch das Förderband sind höhenverstellbar und können über das Kompostierfeld angehoben werden.

Die DE 21 20 606 B - **EISENWERK** - beschreibt eine Vorrichtung für den Haldenabbau, die eine Kombination von Aufnahme und Transport sicherstellt und nur für freie Mieten einsetzbar ist. Die dort beschriebene Umsetzmaschine weist mehrere umlaufende Trommelabschnitte auf, die jeweils mit einem individuellen Antrieb bestückt sein können.

Die GB 2 103 571 A - **QUADRACAST** - schließlich beschreibt eine Umsetzmaschine mit einer Aufnahmevorrichtung und integriertem Transportsystem quer zur Arbeitsrichtung. Dabei können die Umsetzwerkzeuge unabhängig von der Laufrichtung der Umsetzmaschine ihre jeweilige Spezialaufgabe erfüllen.

Die FR-A-2 356 613 - TRENKLE - beschreibt eine als Fahrzeug ausgebildete Maschine zur Umsetzung von Komposthaufen mit einer Walze, auf deren Achsenden je zwei Förderschnecken, sog. Archimedische Schrauben, angebracht sind, die um 180° gegeneinander versetzt sind. Diese Förderschnecken setzen sich mit entsprechender schraubenförmiger Anordnung in Form von Schaufelelementen bis zur Mitte der Walze fort, wobei die Schrauben bezogen auf die Radialebene eine Neigung zwischen 25 und 40° aufweisen. Die Umdrehungsgeschwindigkeit der Walze liegt zwischen 400 und 600 Upm. Damit soll erreicht werden, daß der umgesetzte Komposthaufen ohne zusätzliche Hilfsmittel wieder in seiner ursprünglichen Form angehäuft wird.

Derartige Maschinen eignen sich nicht zum Lockern, Zerkleinern, Homogenisieren und/oder Transportieren fester Stoffgemenge, hier Mieten, die in offenen oder geschlossenen Mietenbehälter-Konstruktionen lagern.

### Offenbarung der Erfindung

Die Erfindung befaßt sich mit der Optimierung von Umsetzmaschinen zur wirtschaftlichen Gestaltung der notwendigen Behandlungsverfahren von Mieten, also festen Stoffgemengen, die in offenen oder geschlossenen Mietenbehältern lagern. Die seitlichen Begrenzungen der Mieten in den Mietenbehältern schaffen hier erhebliche Probleme. Die Praxis zeigt nämlich, daß Gemenge in einem Silo oder einem sonstigen Mietenbehälter zu kompakten Säulen werden können. Diese Säulen können von der Maschine verdichtet und in Schwingungen versetzt werden, was zum Festfahren, Verklemmen und unwirtschaftlichem Energieverbrauch führt. Die Umsetzmaschinen sind dann entweder kraft- und wirkungslos oder sie verschieben das Gemenge lediglich.

Die maschinelle Umsetzung von Stoffgemengen muß gewährleisten, daß die Gemengekomponenten verkleinert und vermischt werden. Mit diesem Vorgang kann ein zusätzlicher Sauerstoffeintrag, eine Luft- oder Gaszufuhr und ggf. eine Bewässerung oder Zugabe chemischer/biologischer Agentien verknüpft sein. Die Umsetzarbeit soll in einem Silo oder in einem geschlossenen Behälter stattfinden und dient dazu, die erforderlichen mikrobiellen und/oder chemischen Stoffumsetzungen zu aktivieren und zu optimieren.

Aufgabe der vorliegenden Erfindung war es daher, eine Umsetzmaschine bereitzustellen, die sich in einfacher Weise an die Beschaffenheit unterschiedlicher Reststoffgemenge anpassen läßt, so daß die eingangs erwähnten Nachteile des Standes der Technik vermieden werden.

Diese Aufgabe wurde durch den Gegenstand von Anspruch 1 gelöst, nämlich durch eine selbsttätig in offenen oder geschlossenen Mietenbehältern vorwärts/rückwärts laufende Umsetzmaschine für die mechanische und/oder chemische Aufbereitung von in einer Miete lagernden Stoffgemengen zum Zwecke der Aktivierung und Optimierung des mikrobiellen und/oder chemischen Stoffumsatzes in der Miete mit wenigstens einem rotierenden Element und mit einem Set, das wenigstens zwei Arten von Umsetzwerkzeugen aus der Gruppe Auflockerungswerkzeuge, Zerkleinerungswerkzeuge und Aufnahme- und Transportwerkzeuge umfaßt, wobei diese Umsetzwerkzeuge zum wahlweisen Austausch gegen andere lösbar mit dem wenigstens einen rotierenden Element verbindbar sind.

Die Erfindung geht also von dem Konzept einer modularen Bauweise aus, die eine robuste maschinelle Basiskonstruktion aufweist und mit wahlweise austauschbaren Spezialwerkzeugen bestückt ist, deren individuelle Ausbildung an das jeweils umzusetzende Stoffgemenge optimal angepaßt ist.

Im einfachsten Fall ist das rotierende Element eine Trommel oder eine Scheibe, deren Durchmesser im wesentlichen gleich der Mietenhöhe ist. Es trägt funktionsbezogene, spezialisierte austauschbare Werkzeuge, deren Zusammenspiel so abgestimmt ist, daß zuerst Material aus der bestehenden Miete gelockert, ggf. zerkleinert und homogenisiert, dann aufgenommen und schließlich über das rotierenden Element nach hinten befördert wird, wo wieder eine Miete entsteht. Die Rotationsgeschwindigkeit ist dabei auf die Art des zu bearbeitenden Gemenges, die Zahl und Anordnung der Werkzeuge, die angestrebte Wurfparabel hinter die Umsetzmaschine sowie den gewünschten Gemengedurchsatz abgestimmt.

Um die angestrebte Funktion der Werkzeuge zu optimieren, können konstruktive Änderungen der Umsetzmaschine notwendig sein. Bevorzugt sind die Umsetzwerkzeuge an die jeweilige Miete individuell angepaßte Auflockerungswerkzeuge, kleinerungswerkzeuge und/oder Aufnahme- und Transportwerkzeuge. Dabei sind die Auflockerungswerkzeuge vorzugsweise lang, schlank bzw. schmal und stumpf ausgebildet, etwa nach Art stumpfer Dorne. Die Zerkleinerungswerkzeuge hingegen sind bevorzugt kürzer als die Auflockerungswerkzeuge ausgebildet; zusätzlich schmal und scharf. Das Material wird also erst gelockert und dann geschnitten, also zerkleinert. Die Transportwerkzeuge schließlich sind kurz, breit und stumpf ausgebildet, greifen also in der Regel als letztes Werkzeug am Stoffgemenge an. Dabei sind die Spezialwerkzeuge so ausgebildet, daß die Lockerung ein Herausreißen und kein Herausschlagen ist. Die herausgerissenen Gemengeanteile werden dann mit gleichsinnig oder gegenläufig arbeitenden Zerkleinerungswerkzeugen, etwa bei mehreren umlaufenden Scheibenrädern, von den Förderwerkzeugen übernommen und insgesamt entsprechend der gewünschten Wurfweite und Wurfrichtung über die Trommel oder das Scheibenrad geworfen. Über die Geschwindigkeit des rotierenden Elementes kann der gewünschte Durchsatz gesteuert werden.

Das Homogenisieren und Vermischen darf nicht zu Verklumpungen und Verschmierungen führen. Dabei ist es wichtig, daß der Vortrieb des Gerätes der Umsetzleistung der Spezialwerkzeuge angepaßt ist. Die Werkzeuge sind dabei funktionell auf die Lockerung, die Zerkleinerung und Homogenisation sowie die Aufnahme und den Transport mit geringstmöglichem Energieaufwand optimiert, derart, daß die Aufnahme und das Absetzen der Gemengeportionen einen Freiraum im Bereich der Umsetzvorrichtung schafft und hierdurch ein Festfahren verhindert; ferner, daß keine Aufschaukelung elastischer Schwingungen durch die Mietenbearbeitung herbeigeführt wird.

Bevorzugt sind die Umsetzwerkzeuge derart symmetrisch zur Drehrichtung des rotierenden Elementes ausgebildet, daß sie unabhängig von der Laufrichtung der Umsetzmaschine und/oder Drehrichtung des rotierenden Elementes ihre Spezialaufgabe erfüllen. Sie können also beispielsweise in beiden Drehrichtungen auflockern, schneiden und/oder transportieren.

Bevorzugt ist der Maschinenvortrieb unabhängig vom Drehantrieb des rotierenden Elementes steuerbar. Weiterhin sind bevorzugt der Maschinenvortrieb und/oder der Drehantrieb des rotierenden Elementes über Reversierschaltungen für einen Antrieb in beiden Vortriebs-/Drehrichtungen ausgelegt.

Die genannten Reversierschaltungen und eine bevorzugt zusätzlich vorgesehene Möglichkeit des selbsttätig Hebens und Senkens der Maschine stellt die Funktionsfähigkeit der Umsetzmaschine auch ohne ständige Personalpräsenz sicher. Vorzugsweise ist ein weiterer Antrieb vorgesehen, der eine beliebige Verfahrbarkeit der Umsetzmaschine ermöglicht, sobald sie aus der Miete in den gekapselten Raum über der Miete hochgehoben worden ist.

Die Umsetzmaschine kann auch mehrere, beispielweise drei versetzt angeordnete kleinere, walzenförmige Trommeln mit gleichem oder unterschiedlichem Durchmesser aufweisen. Die Trommeln können dabei gleich oder verschieden schnell laufen, um den Materialdurchsatz bevorzugt auf die Zerkleinerung oder auf die Homogenisation variieren zu können. Diese Flexibilität weist sich besonders dann als vorteilhaft aus, wenn Stoffgemenge unterschiedlicher Struktur und Dichte mit derselben Maschine bearbeitet werden sollen. Auch Kombinationen von Trommel- oder Scheibenradkonstruktionen für die rotierenden Elemente sind von Vorteil. Die mit den Spezialwerkzeugen bestückten rotierenden Trommel- und Scheibenräder können als rotierende Elemente zur Ausnutzung von Scherkräften gleich- oder gegensinnig laufen.

Schließlich erfordert der Einsatz der Umsetzmaschine in offenen oder geschlossenen Behälterkonstruktionen eine hohe Korrosions- und Verschleißfestigkeit der Antriebsaggregate. Darüberhinaus sind in Abhängigkeit von den jeweiligen Rahmenbedingungen Mittel zum elektrischen, hydraulischen und/oder pneumatischen Betrieb der Umsetzmaschine vorgesehen.

Insgesamt ermöglicht die erfindungsgemäße Umsetzmaschine eine Entkopplung des rotierenden Elementes, d.h. der Umsetztrommel oder des/der Scheibenräder vom Maschinenvortrieb; eine austauschbare mobile Bestückung mit an die unterschiedlichen Aufgaben, nämlich Lockern, Zerkleinern, Homogenisieren und Transportieren individuell angepaßten, die jeweiligen Gemengecharakteristiken berücksichtigenden unterschiedlichen Spezialwerkzeugen; einen Reversierbetrieb; und ein Herausheben oder nach oben Schwenken des rotierenden Elementes aus der Miete.

Nachstehend wird die Erfindung anhand von Ausführungsbeispielen und beigefügter stark schematisierter Zeichnungen beschrieben.

In den Zeichnungen zeigen:
- Fig. 1: eine schematische perspektivische Darstellung des rotierenden Elementes nebst Werkzeugen und Abdeckhaube;
- Fig. 2a - Fig. 2d: konstruktive Ausgestaltungen einer Werkzeugträgerleiste und der Werkzeuge in stark schematisierter Form; und
- Fig. 3a - Fig. 3c: Betriebsmöglichkeiten der Umsetzmaschine.

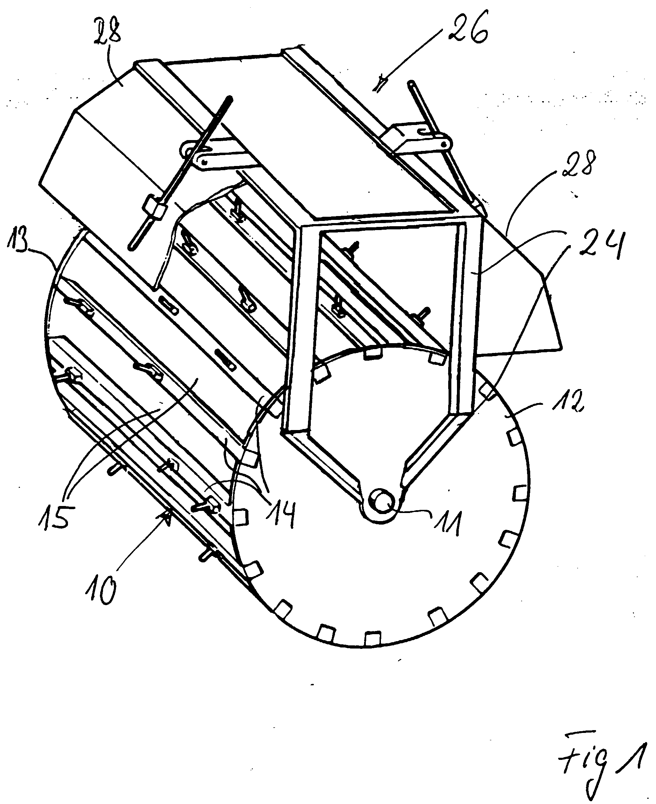

Gemäß Fig. 1 ist das rotierende Element eine Trommel 10, die aus zwei auf einer gemeinsamen Achse 11 im Abstand voneinander angeordneten Scheibenrädern 12, 13 und mehreren, die Scheibenräder zur Trommel 10 verbindenden Werkzeugträgerleisten 14 zusammengesetzt ist. Die Werkzeugträgerleisten 14 sind jeweils auf der Peripherie jedes Scheibenrades 12, 13 befestigt. Sie verlaufen parallel zur Trommelachse 11 und haben einen gegenseitigen Abstand voneinander. Zwischen den Werkzeugträgerleisten 14 befinden sich also über den gesamten Trommelmantel verlaufende Durchfallschlitze 15.

Auf der Trommelachse 11 ist ein (nicht dargestellt) Antrieb für die Rotation der Trommel 10 vorgesehen. Zusätzlich ist ein davon unabhängiger zweiter Antrieb (ebenfalls nicht dargestellt) vorgesehen, welcher den Vorschub, also den Vorlauf oder Rücklauf der gesamten Maschine bewirkt.

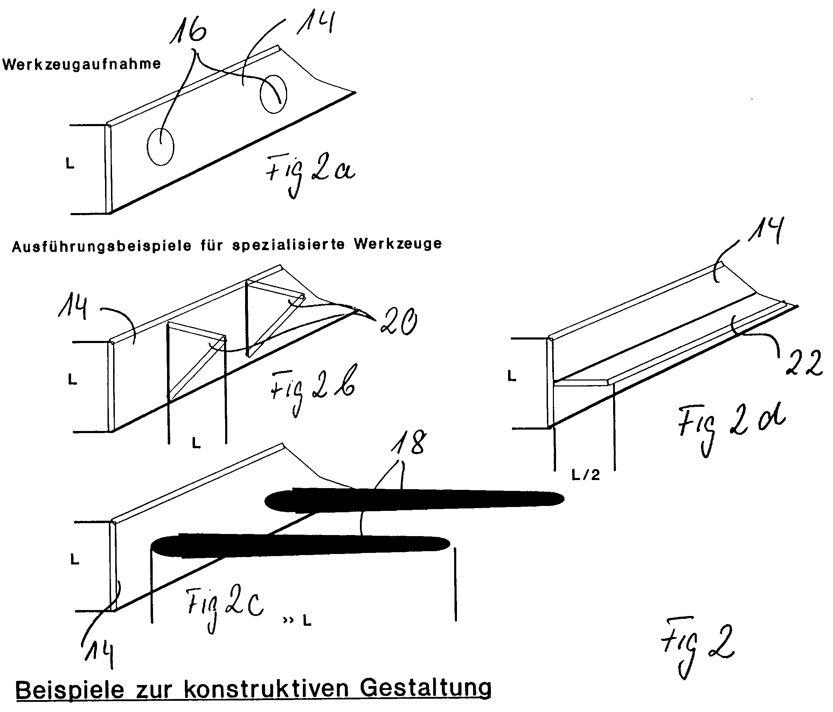

Fig. 2a zeigt nochmals einen Abschnitt einer Werkzeugträgerleiste 14 mit darin schematisch gezeichneten Werkzeugaufnahmen 16. Die Werkzeugaufnahmen und die in diese Aufnahmen eingreifenden Teile der Werkzeuge sind lösbar miteinander verbunden, so daß die Werkzeuge jederzeit gegen andere ausgetauscht werden können.

Fig. 2b zeigt Schneidwerkzeuge 20 in Form gleichschenkeliger Dreiecke, die jeweils mit ihrer Basis auf der Werkzeugträgerschiene 14 lösbar befestigt sind. Die beiden Schenkelkanten des Dreieckes sind messerartig ausgebildet. Diese symmetrische Schneidwerkzeugausbildung stellt ein Zerkleinern des Stoffgemenges in beiden Drehrichtungen der Trommel 10 sicher.

Fig. 2c zeigt ein Ausführungsbeispiel für Auflockerungswerkzeuge 18 in Form langer, schlanker, vorne stumpfer Dornen, die ebenfalls in beiden Drehrichtungen in der Trommel 10 ihre Funktion erfüllen.

Fig. 2d schließlich zeigt ein Transportwerkzeug 22 in Form einer radial von der Werkzeugträgerleiste 14 nach außen abstehenden Transportleiste 22. Auch das Transportwerkzeug 22 ist so angeordnet, daß es in beiden Drehrichtungen seine Transportaufgabe erfüllt.

Der Buchstabe L dient hier lediglich als Vergleichsgröße für die Länge der Werkzeuge. Danach steht das Transportwerkzeug 22 nur etwa halb so weit von der Werkzeugträgerleiste 14 vor, wie die Spitze des Schneidwerkzeuges 20. Die Auflockerungswerkzeuge 18 hingegen stehen erheblich weiter vor, als die beiden vorgenannten Werkzeuge.

Die dargestellten Werkzeuge sind lediglich Ausführungsbeispiele, die in Abhängigkeit der jeweiligen Charakteristika des umzusetzenden Gemenges variiert werden können.

Gemäß Fig. 1 ist die Trommel 10 an einem Rahmen 24 aufgehängt. Der Rahmen 24 besteht auf jeder Seite der Trommel aus zwei sich von der Trommelachse 11 nach oben V-förmig erweiternden Schienen, an die ein auf dem Kopf stehendes U anschließt. Die Eckbereiche der beiden auf dem Kopf stehenden U-Teile des Rahmens 24 sind über horizontale, parallel zur Trommelachse 11 verlaufende Schienen miteinander verbunden. An dem so gebildeten Rahmen 24 ist eine Haube 26 befestigt, die aus einer oberen Abdeckung und zwei schwenkbar angeordneten Klappen 28 besteht. Die Haube kann über einen (nicht dargestellten) Absaugstutzen mit einer Absaugvorrichtung verbunden sein. Statt der Absaugvorrichtung kann auch eine Einblas- oder Sprühvorrichtung vorgesehen sein, beispielsweise zum Aufbringen von die gewünschte Umsetzung fördernden biologischen und/oder chemischen Agenzien.

Bei dem dargestellten Ausführungsbeispiel wird die Trommel 10 insgesamt in einem (nicht dargestellten) rechteckigen Silo geführt. Dabei sind auf den in Richtung der Vorschubbewegung der Trommel 10 verlaufenden seitlichen vertikalen Silowänden (nicht dargestellte) Führungsschienen angebracht, auf denen (ebenfalls nicht dargestellte) Räder an den Schenkeln des auf dem Kopf stehenden U-Teils des Rahmens 24 laufen. Wichtig ist, daß der für den Vorschub, d.h. die Vor- und Rücklaufbewegung der gesamten Umsetzmaschine verantwortliche Antrieb und der für die Rotation der Trommel 10 verantwortliche Antrieb unabhängig voneinander steuerbar sind, die Drehzahl also unabhängig vom Vorschub gesteuert werden kann.

Die axial über den Trommelmantel verlaufenden Durchfallschlitze 15 stellen einen bequemen Zugriff zum Inneren der Trommel 10 sicher, insbesondere zum Rotationsantrieb und die dortigen Lager. Hinzu kommt, daß in das Trommelinnere fallendes Material stets wieder automatisch aus dem Trommelinnern herausbefördert wird. Verstopfungen, die zu einem Festfressen der Trommellager führen würden, sind also ausgeschlossen. Schließlich fördert die dargestellte Konstruktion eine Durchlüftung und Homogenisierung des umzusetzenden Gemenges.

Über die verschwenkbaren Klappen 28 läßt sich die Wurfparabel steuern. Die Klappen 28 dienen insoweit als Leitbleche für das geschleuderte Gemenge; sie können auch eine Egalisierung der freien Mietenoberfläche bewirken, ggf. unter Einsatz zusätzlicher Gummischürzen.

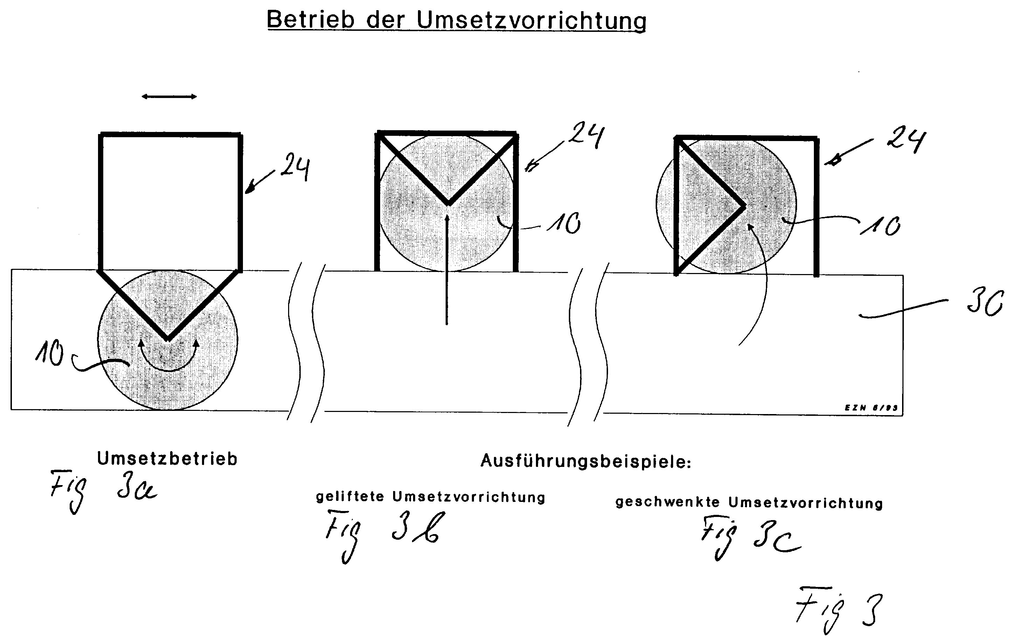

Fig. 3a verdeutlicht nochmals die Unabhängigkeit zwischen Vortrieb/Rücktrieb der Umsetzmaschine und der jeweiligen Rotationsrichtung und -geschwindigkeit der Trommel 10.

Fig. 3b symbolisiert die Möglichkeit, die Trommel 10 anzuheben, und zwar bis über die Miete 30. Bei dem dargestellten Ausführungsbeispiel ist die Einrichtung zum Anheben der Trommel 10 so ausgelegt, daß eine stufenlose Höhenverstellbarkeit der Trommel gewährleistet ist. Somit kann die Trommel in jeder gewünschten Höhenlage über oder durch die Miete 30 geführt werden, was eine bequeme Anpassung an die Länge der jeweils eingesetzten Spezialwerkzeuge ermöglicht.

Fig. 3c schließlich veranschaulicht eine Einrichtung zum Hochschwenken, also nicht vertikalen Hochliften der Trommel 10.

Bevorzugt weist die Umsetzmaschine Sensoren auf, die bei einer Störung, z.B. einem Festfahren, das oben beschriebene Liften oder Schwenken automatisch ansteuern.

## Patentansprüche

1. Selbsttätig in offenen oder geschlossenen Mietenbehältern vorwärts/rückwärts laufende Umsetzmaschine für die mechanische und/oder chemische Aufbereitung von in einer Miete (30) lagernden Stoffgemengen zum Zwecke der Aktivierung und Optimierung des mikrobiellen und/oder chemischen Stoffumsatzes in der Miete (30) mit wenigstens einem rotierenden Element (10) und mit einem Set, das wenigstens zwei Arten von Umsetzwerkzeugen aus der Gruppe Auflockerungswerkzeuge (18), Zerkleinerungswerkzeuge (20) und Aufnahme- und Transportwerkzeuge (22) umfaßt, wobei diese Umsetzwerkzeuge zum wahlweisen Austausch gegen andere lösbar mit dem wenigstens einen rotierenden Element (10) verbindbar sind.

2. Umsetzmaschine nach Anspruch 1, bei welcher die Auflockerungswerkzeuge (18) im wesentlichen lang, schlank und stumpf ausgebildet sind.

3. Umsetzmaschine nach Anspruch 1 oder 2, bei welcher die Zerkleinerungswerkzeuge (20) im wesentlichen kürzer als die Auflockerungswerkzeuge (18), schmal und scharf sind.

4. Umsetzmaschine nach einem der Ansprüche 1 bis 3, bei welcher die Transportwerkzeuge (22) kurz, breit und stumpf ausgebildet sind.

5. Umsetzmaschine nach einem der Ansprüche 1 bis 4, bei welcher die Umsetzwerkzeuge (18, 20, 22) derart symmetrisch ausgebildet sind, daß sie unabhängig von der Laufrichtung der Umsetzmaschine und/oder der Drehrichtung des rotierenden Elements (10) ihre Spezialaufgabe erfüllen.

6. Umsetzmaschine nach einem der vorstehenden Ansprüche, bei welcher das rotierende Element (10) als ein oder mehrere Scheibenräder oder als Trommelwalze (10) ausgebildet ist.

7. Umsetzmaschine nach einem der vorstehenden Ansprüche, bei welcher einseitig oder beidseitig oberhalb des rotierenden Elements (10) starre oder rotierende Egalisierungsvorrichtungen (26, 28) angeordnet sind.

8. Umsetzmaschine nach Anspruch 7, bei welcher die Egalisierungsvorrichtungen (26, 28) Teil einer das rotierende Element (10) überdeckenden Haube (26) zur Kapselung des Arbeitsbereichs ist.

9. Umsetzmaschine nach Anspruch 8, bei welcher die Haube (26) mit einem Ansaugstutzen oder einer Absaugeinrichtung und/oder einer Blas- oder Sprüheinrichtung versehen ist.

10. Umsetzmaschine nach einem der vorstehenden Ansprüche, bei welcher der Maschinenvortrieb unabhängig vom Drehantrieb des rotierenden Elements (10) steuerbar ist.

11. Umsetzmaschine nach einem der vorstehenden Ansprüche, bei welcher der Maschinenvortrieb und/oder der Drehantrieb über Reversierschaltungen für einen Antrieb in beiden Vortriebs-/Drehrichtungen ausgelegt ist.

12. Umsetzmaschine nach einem der vorstehenden Ansprüche mit Mitteln zum manuellen oder automatischen Anheben oder Absenken der gesamten Umsetzmaschine oder einzelner Teile (10) hiervon.

13. Umsetzmaschine nach einem der vorstehenden Ansprüche mit Mitteln zum Anheben der gesamten Umsetzmaschine über die Miete und zum beliebigen Verfahren der angehobenen Umsetzmaschine.

14. Umsetzmaschine nach einem der vorstehenden Ansprüche, bei welcher mehrere rotierende Elemente (10) vorgesehen sind, die einzeln oder gruppiert mit gleicher oder unterschiedlicher Drehgeschwindigkeit in einer der beiden Drehrichtungen antreibbar sind.

15. Umsetzmaschine nach einem der vorstehenden Ansprüche mit elektrischen, hydraulischen und/oder pneumatischen Steuer- und/oder Antriebsmitteln.

16. Umsetzmaschine nach einem der vorstehenden Ansprüche, bei welcher das rotierende Element (10) als Trommelwalze (10) mit über den Trommelmantel verlaufenden Durchfallschlitzen (15) ausgebildet ist.

## Claims

1. Converting machine running forwards/backwards automatically in open or closed compost containers for the mechanical and/or chemical treatment of quantities of material being stored in a compost container (30) for the purpose of activating and optimising the microbial and/or chemical conversion of material in the compost container (30), having at least one rotating element (10) and having a set which comprises at least two types of converting tools from the group of loosening tools (18), comminution tools (20) and receiving and transport tools (22), wherein these conversion tools can be connected detachably for selective exchange for others to the rotating element (10), of which there is at least one.

2. Converting machine according to Claim 1, in which the loosening tools (18) are essentially long, slender and blunt in construction.

3. Converting machine according to Claim 1 or 2, in which the comminution tools (20) are essentially shorter than the loosening tools (18), narrow and sharp.

4. Converting machine according to one of Claims 1 to 3, in which the transport tools (22) are short, wide and blunt in construction.

5. Converting machine according to one of Claims 1 to 4, in which the converting tools (18, 20, 22) are constructed symmetrically in such a way that they fulfil their special task independently of the running direction of the converting machine and/or the direction of rotation of the rotating element (10).

6. Converting machine according to one of the preceding claims, in which the rotating element (10) is constructed as one or more disk wheels or as a drum cylinder (10).

7. Converting machine according to one of the preceding claims, in which on one side or on both sides above the rotating element (10) rigid or rotating levelling devices (26, 28) are arranged.

8. Converting machine according to Claim 7, in which the levelling devices (26, 28) are part of hood (26) covering the rotating element (10) for encapsulating the working region.

9. Converting machine according to Claim 8, in which the hood (26) is provided with a suction connecting piece or an evacuating device and/or a blowing or spraying device.

10. Converting machine according to one of the preceding claims, in which the machine forward drive can be controlled independently of the rotary drive of the rotating element (10).

11. Converting machine according to one of the preceding claims, in which the machine forward drive and/or the rotary drive is designed through reversing circuits for movement in both forward-/rotational directions.

12. Converting machine according to one of the preceding claims with means for the manual or automatic raising or lowering of the entire converting machine or individual parts (10) thereof.

13. Converting machine according to one of the preceding claims with means for raising the entire converting machine over the compost container and for the arbitrary travel of the raised converting machine.

14. Converting machine according to one of the preceding claims, in which several rotating elements (10) are provided which individually or in groups can be driven at the same or variable rotational speed in one of the two directions of rotation.

15. Converting machine according to one of the preceding claims with electric, hydraulic and/or pneumatic control and/or driving means.

16. Converting machine according to one of the preceding claims, in which the rotating element (10) is constructed as a drum cylinder (10) with sifting slots (15) running over the drum casing.

## Revendications

1. Machine de conversion se déplaçant automatiquement vers l'avant/vers l'arrière dans des conteneurs de tas de compost ouverts ou fermés pour le traitement mécanique et/ou chimique de quantités de matière en stock dans un tas de compost (30) en vue de l'activation et de l'optimisation de la conversion microbienne et/ou chimique de matière dans le tas de compost (30), machine comportant au moins un élément rotatif (10) et un ensemble, qui comprend au moins deux types d'outils de conversion faisant partie du groupe contenant des outils de désagrégation (18), des outils de fragmentation (20) et des outils de réception et de transport (22), ces outils de conversion pouvant, en vue d'un échange sélectif avec d'autres, être reliés de façon séparable avec l'élément rotatif (10), prévu en nombre au moins égal à l'unité.

2. Machine de conversion selon la revendication 1, dans laquelle les outils de désagrégation (18) sont réalisés sensiblement longs, effilés et tronqués.

3. Machine de conversion selon la revendication 1 ou 2, dans laquelle les outils de fragmentation (20) sont, sensiblement, plus courts que les outils de désagrégation (18) et ils sont étroits et tranchants.

4. Machine de conversion selon la revendication 3, dans laquelle les outils de transport (22) sont réalisés courts, larges et tronqués.

5. Machine de conversion selon une des revendications 1 à 4, dans laquelle les outils de conversion (18, 20, 22) sont pourvus d'une structure symétrique de telle sorte qu'ils remplissent leur fonction indépendamment du sens de marche de la machine de conversion et/ou du sens de rotation de l'élément rotatif (10).

6. Machine de conversion selon une des revendications précédentes, dans laquelle l'élément rotatif (10) est agencé comme une ou plusieurs roues en forme de disques ou comme un tambour cylindrique (10).

7. Machine de conversion selon une des revendications précédentes, dans laquelle il est prévu sur un ou sur les deux côtés et au-dessus de l'élément rotatif (10) des dispositifs d'égalisation (26, 28) immobiles ou rotatifs.

8. Machine de conversion selon la revendication 7, dans laquelle les dispositifs d'égalisation (26, 28) font partie d'une hotte (26), recouvrant l'élément rotatif (10) en vue d'un enveloppement de la zone de travail.

9. Machine de conversion selon la revendication 8, dans laquelle la hotte (26) est pourvue d'une tubulure d'aspiration ou d'un dispositif d'admission et/ou d'un dispositif de soufflage ou de pulvérisation.

10. Machine de conversion selon une des revendications précédentes, dans laquelle le mécanisme de propulsion de la machine peut être commandé indépendamment du mécanisme d'entraînement en rotation de l'élément rotatif (10).

11. Machine de conversion selon une des revendications précédentes, dans laquelle le mécanisme de propulsion de la machine et/ou le mécanisme d'entraînement en rotation sont équipés de circuits d'inversion afin de permettre un entraînement dans les deux sens de propulsion et dans les deux sens de rotation.

12. Machine de conversion selon une des revendications précédentes, comportant des moyens pour faire monter ou descendre manuellement ou automatiquement l'ensemble de la machine de conversion ou bien différentes parties (10) de celle-ci.

13. Machine de conversion selon une des revendications précédentes, comportant des moyens pour faire monter la machine de conversion au-dessus du tas de compost et pour faire opérer à volonté la machine de conversion relevée.

14. Machine de conversion selon une des revendications précédentes, dans laquelle il est prévu plusieurs éléments rotatifs (10), qui peuvent être entraînés séparément ou de façon groupée, à des vitesses de rotation identiques ou différentes, dans un des deux sens de rotation.

15. Machine de conversion selon une des revendications précédentes, comportant des moyens de commande et/ou d'entraînement électriques, hydrauliques et/ou pneumatiques.

16. Machine de conversion selon une des revendications précédentes, dans laquelle l'élément rotatif (10) est agencé comme un tambour cylindrique (10) comportant des fentes (15) de passage de matière réparties sur la périphérie du tambour.
